# FASCICULE DE BREVET EUROPEEN

(11) **EP 4 455 518 B1**
(45) Date de publication et mention de la délivrance du brevet: **26.11.2025**
(21) Numéro de dépôt: 24170352.9
(22) Date de dépôt: 15.04.2024
(51) Int. Cl.: F16H 63/30, F16H 61/28, F16H 61/32, F16H 63/32

(54) **DISPOSITIF D'ACTIONNEMENT POUR SYSTÈME DE TRANSMISSION**
BETÄTIGUNGSVORRICHTUNG FÜR EIN GETRIEBESYSTEM
ACTUATING DEVICE FOR A TRANSMISSION SYSTEM

(30) Priorité: 19.04.2023 FR 2303933
(43) Date de publication de la demande: 30.10.2024
(73) Titulaire: VALEO EMBRAYAGES, 80009 Amiens (FR)
(72) Inventeur: MOLLIER, Christophe, 80009 AMIENS (FR); MAUREL, Herve, 80009 AMIENS (FR); DIASCORN, Fabien, 80009 AMIENS (FR)
(74) Mandataire: Valeo Powertrain Systems

(56) Documents cités:
- EP-A1- 1 520 127
- DE-A1- 102021 209 053
- FR-A1- 2 485 674
- US-A- 4 428 248

## Description

La présente invention concerne le domaine des dispositifs d'actionnement pour système de transmission.

Le dispositif d'actionnement est par exemple inséré dans un système de transmission du type embrayage de connexion intercalé entre la sortie d'un réducteur de vitesse et la roue du véhicule. Alternativement, le dispositif d'actionnement est par exemple utilisé en complément d'une fourchette d'actionnement pour le changement d'un rapport de vitesses au sein d'une boite de vitesses. Le système de transmission peut transmettre par exemple un couple ou un mouvement.

Dans le cas d'un réducteur de vitesse à plusieurs rapports ou d'une boite de vitesses, le dispositif d'actionnement permet un crabotage entre un baladeur mobile axialement et au moins un pignon fou, généralement deux pignons fous. Le ou les pignons fous sont montés libres autour d'un arbre mené et le baladeur est couplé en rotation avec cet arbre mené. Ainsi, le crabotage d'un pignon fou permet de solidariser en rotation ce pignon fou avec cet arbre mené. Le déplacement axial du baladeur est placé sous la dépendance d'une fourchette de sélection d'au moins un rapport, généralement de deux rapports. Un tel crabotage s'effectue lors d'une correspondance angulaire entre les dents de crabotage du baladeur et les dents de crabotage de l'un des pignons fous.

De tels dispositifs d'actionnement peuvent être utilisés dans certaines boites de vitesses robotisées, dans lesquelles la sélection des rapports est commandée par un dispositif d'actionnement tel qu'un actionneur électromécanique. Un tel dispositif d'actionnement est connu du document EP1520127. Dans cette boite de vitesses, l'actionneur électromécanique utilise une tige d'actionneur mobile en rotation, qui est pourvue au niveau de son extrémité d'une broche excentrique pour une coopération avec le baladeur mobile. Une rotation de la tige d'actionneur sur 180° au moyen d'un moteur électrique depuis la position de rotation correspondant à une position d'extrémité axiale du baladeur mobile à une position de rotation correspondant à l'autre position d'extrémité axiale du baladeur mobile mène à un accouplement ou un désaccouplement de l'embrayage à crabots.

Un inconvénient de ce dispositif d'actionnement réside dans le fait qu'il est nécessaire d'effectuer une rotation à 180° de la tige d'actionneur pour atteindre les deux positions extrêmes d'actionnement. Le temps d'actionnement est donc rallongé. Un positionnement angulaire précis de la tige d'actionneur est également nécessaire pour être sûr de conserver la position extrême située à 180°. En conséquence, le dispositif d'actionnement doit comprendre un capteur de position angulaire précis. Enfin, les deux positions extrêmes d'actionnement ne sont pas stables car une variation angulaire de quelques degrés sur la tige d'actionneur génère un déplacement du baladeur mobile avec le risque de désengager le rapport de vitesse.

En outre, il est connu du document US4428248A un dispositif d'actionnement selon le préambule de la revendication 1.

La présente invention vise à pallier ces inconvénients en proposant un dispositif d'actionnement ayant un temps d'actionnement réduit pour atteindre les deux positions extrêmes d'actionnement.

La présente invention a ainsi pour principal objet un dispositif d'actionnement pour un système de transmission, comprenant :
- un moteur électrique lié cinématiquement à un dispositif de réduction de vitesse et un arbre de sortie du dispositif de réduction de vitesse d'axe de rotation Y, l'arbre de sortie est agencé pour pivoter selon trois secteurs angulaires adjacents, un premier secteur angulaire, un deuxième secteur angulaire qui est adjacent au premier secteur angulaire, un troisième secteur angulaire qui est adjacent au deuxième secteur angulaire ;
- une came d'actionnement solidaire en rotation de l'arbre de sortie ;
- une pièce de réception mobile axialement selon un axe principal X perpendiculaire à l'axe de rotation Y comportant un logement de réception de la came d'actionnement formé par deux surfaces parallèles entre-elles et perpendiculaires à l'axe principal X, le dispositif d'actionnement étant remarquable en ce que la pièce de réception se déplace axialement entre deux positions extrêmes lorsque l'arbre de sortie pivote selon la totalité du deuxième secteur angulaire,

la pièce de réception restant immobile axialement dans une première position extrême lorsque la rotation de l'arbre de sortie se situe dans le premier secteur angulaire,
et la pièce de réception restant immobile axialement dans une deuxième position extrême lorsque la rotation de l'arbre de sortie se situe dans le troisième secteur angulaire.

Ce dispositif d'actionnement permet, notamment grâce au premier secteur angulaire et au troisième secteur angulaire, d'avoir deux positions extrêmes d'actionnement stables car une variation angulaire de quelques degrés sur l'arbre de sortie ne génère pas de déplacement de la pièce de réception. Comme les deux positions extrêmes d'actionnement sont stables, il est possible de couper l'alimentation électrique au sein du dispositif d'actionnement, on réduit ainsi la consommation électrique du véhicule.

La valeur d'angle du deuxième secteur angulaire est strictement inférieure à 180°. Ainsi, le débattement angulaire de l'arbre de sortie est réduit, ce qui a pour conséquence de réduire le temps d'actionnement.

Selon la présente invention, la came d'actionnement présente deux zones de contact en appui sur les surfaces parallèles du logement de réception, et la came d'actionnement est configurée de telle sorte que la largeur d'appui selon l'axe principal X séparant les deux zones de contact est constante sur les trois secteurs angulaires de rotation de l'arbre de sortie. La précision de l'actionnement est ainsi améliorée.

Avantageusement, un jeu de fonctionnement peut être défini entre la largeur d'appui de la came d'actionnement et la distance séparant axialement selon l'axe principal X les deux surfaces parallèles du logement de réception, le jeu de fonctionnement est constant sur les trois secteurs angulaires de rotation de l'arbre de sortie. Le jeu de fonctionnement est de l'ordre de 0,1 mm à 0,6 mm. La précision de l'actionnement est ainsi améliorée.

De préférence, la pièce de réception peut être une pièce de révolution autour de l'axe principal X, le logement de réception étant une gorge annulaire. Un mouvement relatif de rotation selon l'axe principal X entre la pièce de réception et la came d'actionnement est possible.

Avantageusement, la pièce de réception peut comprendre au moins une première cannelure de connexion agencée pour entrainer en rotation un arbre mené et une deuxième cannelure de connexion agencée pour entrainer un arbre menant, les première et deuxième cannelures de connexion étant engagées lorsque la pièce de réception est dans une deuxième position extrême d'accouplement et l'une des première et deuxième cannelures de connexion étant désengagée lorsque la pièce de réception est dans une première position extrême de désaccouplement.

De préférence, la came d'actionnement peut comprendre trois faces d'actionnement réalisées sous la forme de portion de cylindre, les trois centres de portion de cylindre forment un triangle isocèle, le sommet principal du triangle isocèle étant confondu avec l'axe de rotation Y de l'arbre de sortie. La géométrie des zones de contact de la came d'actionnement utilise des portions de cylindre de grand diamètre permettant ainsi de réduire la pression de contact avec les surfaces parallèles du logement de réception.

Avantageusement, la came d'actionnement peut présenter un profil d'actionnement symétrique dont l'axe de symétrie passe par la bissectrice du triangle isocèle, la bissectrice du triangle isocèle correspondant au milieu du deuxième secteur angulaire. La came d'actionnement présente ainsi un profil symétrique passant par l'axe de rotation Y.

Selon une variante, la came d'actionnement peut comprendre trois faces d'actionnement réalisées sous la forme de portion de cylindre, les trois centres de portion de cylindre forment un triangle équilatéral, un des sommets du triangle équilatéral étant confondu avec l'axe de rotation Y de l'arbre de sortie.

Selon une autre variante, la came d'actionnement peut comprendre trois faces d'actionnement réalisées sous la forme de portion de cylindre, les trois centres de portion de cylindre forment un triangle isocèle rectangle, le sommet principal du triangle isocèle rectangle étant confondu avec l'axe de rotation Y de l'arbre de sortie. Avec cette géométrie en forme de triangle rectangle, la rotation selon l'axe de rotation Y de la came d'actionnement n'est que de 90° pour atteindre les deux positions extrêmes. Plus précisément, le deuxième secteur angulaire a une valeur d'angle de 90°.

Avantageusement, au moins deux faces d'actionnement de la came d'actionnement peuvent être raccordées entre-elles par une face de liaison cylindrique de rayon inférieur au rayon des portions de cylindre, le rayon de liaison étant compris entre 1 et 5 mm.

De préférence, la came d'actionnement peut comprendre un rayon d'extrémité agencé pour interagir avec les surfaces parallèles de la pièce de réception lorsque celle-ci est dans l'une des deux positions extrêmes, ledit rayon d'extrémité raccorde de manière tangentielle deux faces d'actionnement, le centre de ce rayon d'extrémité étant concentrique à l'axe de rotation Y.

Par exemple, le rayon d'extrémité peut être supérieur au rayon des faces de liaison cylindrique. On évite ainsi le matage de la zone de contact du rayon d'extrémité lorsque la pièce de réception reste immobile axialement dans une des deux positions extrêmes.

Selon un mode de réalisation, l'axe principal X de la pièce de réception peut être sécant à l'axe de rotation Y.

Selon un autre mode de réalisation, l'axe principal X de la pièce de réception peut être non sécant à l'axe de rotation Y, l'axe de rotation Y étant décalé par rapport un plan parallèle à l'axe de rotation Y et passant par l'axe principal X d'une valeur comprise 0 mm et la hauteur du triangle isocèle ou équilatéral de la came d'actionnement.

Selon un autre mode de réalisation, la came d'actionnement peut comprendre n faces d'actionnement réalisées sous la forme de portion de cylindre, les n centres de portion de cylindre formant un polygone régulier ayant un nombre de cotés impairs, par exemple un pentagone.

Le dispositif d'actionnement selon l'invention peut présenter l'une ou l'autre des caractéristiques décrites ci-dessous combinées entre elles ou prises indépendamment les unes des autres :
- le dispositif d'actionnement est rapporté sur un carter de fixation ;
- la valeur d'angle du premier secteur angulaire est supérieur à 3° ;
- la valeur d'angle du deuxième secteur angulaire est compris entre 20 ° et 179° ;
- la valeur d'angle du troisième secteur angulaire est supérieur à 3° ;
- la valeur d'angle du premier secteur angulaire est identique à la valeur d'angle du troisième secteur angulaire ;
- la valeur d'angle du premier secteur angulaire est différente de la valeur d'angle du troisième secteur angulaire ;
- la valeur d'angle du deuxième secteur angulaire est supérieur à la valeur d'angle du premier secteur angulaire ;
- la valeur d'angle du deuxième secteur angulaire est supérieur à la valeur d'angle du troisième secteur angulaire ;
- la came d'actionnement comprend un orifice de liaison, l'arbre de sortie étant inséré dans l'orifice de liaison de la came d'actionnement ;
- l'arbre de sortie est emmanché en force dans l'orifice de liaison de la came d'actionnement ;
- l'arbre de sortie est soudé à la came d'actionnement ;
- l'arbre de sortie est lié par cannelure ou par emboitement de formes à l'orifice de liaison de la came d'actionnement.

L'invention a également pour objet, selon un autre de ses aspects, un système de transmission comprenant :
- un arbre menant de transmission comprenant une première cannelure externe ;
- un arbre mené de transmission coaxial à l'arbre menant comprenant une deuxième cannelure externe ;
- un dispositif d'actionnement reprenant tout ou partie des caractéristiques mentionnées précédemment, dans lequel la pièce de réception est un baladeur axial ayant une forme de révolution, le baladeur axial comprenant au moins une première cannelure interne de connexion agencée pour entrainer en rotation l'arbre menant et une deuxième cannelure interne de connexion agencée pour entrainer en rotation l'arbre mené, les première et deuxième cannelures internes étant engagées respectivement dans la première cannelure externe de l'arbre menant et la deuxième cannelure externe de l'arbre mené lorsque la pièce de réception est dans une des deux positions extrêmes, cette position extrême étant appelée deuxième position extrême d'accouplement.

Cette architecture de système de transmission est compacte et conviendra pour toute intégration au sein d'un réducteur de vitesse de véhicule électrique pour déconnecter la transmission du couple en provenance de l'arbre menant, par exemple l'arbre de sortie d'un réducteur de vitesse, à l'arbre mené, par exemple la roue d'un véhicule. Lorsque la machine électrique réversible associée au réducteur de vitesse est inactive, il n'y a pas d'intérêt à laisser ladite machine connectée à la roue du véhicule. Dans ce mode de réalisation de l'invention, le système de transmission est un embrayage de connexion amélioré entre deux arbres menant et mené.

Avantageusement, la deuxième cannelure interne de connexion du baladeur axial peut être réalisée sous la forme d'une série de cannelures internes espacées axialement selon un pas régulier, par exemple cinq cannelures internes espacées axialement selon un pas compris entre 3 et 15 mm.

De préférence, la deuxième cannelure interne de connexion peut être désengagée de la deuxième cannelure externe de l'arbre mené lorsque la pièce de réception est dans l'autre des deux positions extrêmes, cette position extrême étant appelée première position extrême de désaccouplement.

L'invention a également pour objet, selon un autre de ses aspects, un système de transmission comprenant :
- un arbre mené de transmission ;
- un pignon fou mobile en rotation autour de l'arbre mené de transmission d'axe principal X, le pignon fou comprend une cannelure de crabotage ;
- un manchon de crabotage mobile axialement selon l'axe principal X, le manchon de crabotage étant entrainé en rotation par une cannelure interne en prise avec une cannelure externe de l'arbre mené de transmission, la cannelure interne du manchon de crabotage étant apte à entrainer la cannelure de crabotage du pignon fou ;
- une fourchette d'actionnement mobile axialement le long d'une tige de commande d'axe secondaire X1 parallèle à l'axe principal X et agencée pour déplacer le manchon de crabotage ;
- un dispositif d'actionnement reprenant tout ou partie des caractéristiques mentionnées précédemment, dans lequel la pièce de réception est un organe de commande solidaire de la fourchette d'actionnement et qui coulisse le long de l'axe secondaire X1 de la tige de commande, de sorte que lorsque la pièce de réception est dans une première position extrême de désaccouplement, aucun couple n'est transmis entre le pignon fou et l'arbre mené de transmission et lorsque la pièce de réception est dans une deuxième position extrême d'accouplement, un couple est transmis entre le pignon fou et l'arbre mené de transmission.

Cette architecture de système de transmission est compacte et conviendra pour toute intégration au sein d'un réducteur de vitesse de véhicule électrique pour connecter un pignon fou à un arbre mené. Lorsque la machine électrique réversible associée au réducteur de vitesse est inactive, il n'y a pas d'intérêt à engager le rapport de vitesse au sein du réducteur de vitesse. Dans ce mode de réalisation de l'invention, le système de transmission est un embrayage à crabots à simple rapport amélioré.

L'invention a également pour objet, selon encore un autre de ses aspects, un système de transmission comprenant :
- un arbre mené de transmission ;
- un premier pignon fou mobile en rotation autour de l'arbre mené de transmission d'axe principal X et un deuxième premier pignon fou mobile en rotation autour de l'arbre mené de transmission, chacun des deux pignons fous comprend une cannelure de crabotage ;
- un manchon de crabotage mobile axialement selon l'axe principal X, le manchon de crabotage étant entrainé en rotation par une cannelure interne en prise avec une cannelure externe de l'arbre mené de transmission, la cannelure interne du manchon de crabotage étant apte à entrainer la cannelure de crabotage de l'un ou l'autre des pignons fous ;
- une fourchette d'actionnement mobile axialement le long d'une tige de commande d'axe secondaire X1 parallèle à l'axe principal X et agencée pour déplacer le manchon de crabotage ;
- un dispositif d'actionnement reprenant tout ou partie des caractéristiques mentionnées précédemment, dans lequel la pièce de réception est un organe de commande solidaire de la fourchette d'actionnement et qui coulisse le long de l'axe secondaire X1 de la tige de commande, de sorte que lorsque la pièce de réception est dans une première position extrême d'accouplement, un couple est transmis entre le premier pignon fou et l'arbre mené de transmission, lorsque la pièce de réception est dans une deuxième position extrême d'accouplement, un couple est transmis entre le deuxième pignon fou et l'arbre mené de transmission

Avantageusement, le manchon de crabotage peut être dans une position intermédiaire de désaccouplement lorsque la position angulaire de l'arbre de sortie se situe à la moitié du deuxième secteur angulaire.

Cette architecture de système de transmission est compacte et conviendra pour toute intégration au sein d'un réducteur de vitesse de véhicule électrique à double rapport pour connecter l'un ou l'autre des pignons fous à un arbre mené. Lorsque la machine électrique réversible associée au réducteur de vitesse est inactive, il n'y a pas d'intérêt à engager l'un ou l'autre des rapports de vitesse au sein du réducteur de vitesse. Dans ce mode de réalisation de l'invention, le système de transmission est un embrayage à crabots à double rapports amélioré.

De préférence, l'organe de commande peut présenter un logement de réception en forme de U comprenant deux bras d'actionnement supportant les surfaces parallèles séparées selon l'axe principal X par une distance.

Avantageusement, la fourchette d'actionnement peut intégrer directement l'organe de commande, un moyeu central et des bras, le moyeu central coulissant sur la tige de commande.

De préférence, la tige de commande peut être fixe par rapport à un carter de fixation.

L'invention concerne en outre une boîte de vitesses, comprenant un système de transmission d'au moins un rapport tel qu'évoqué précédemment, le dispositif d'actionnement entraînant le coulissement de la pièce de réception le long de l'axe secondaire X1 de la tige de commande.

L'invention concerne par ailleurs un véhicule automobile hybride ou électrique comprenant un système de transmission tel qu'évoqué précédemment.

D'autres caractéristiques, détails et avantages de l'invention ressortiront plus clairement à la lecture de la description qui suit d'une part, et d'exemples de réalisation donnés à titre indicatif et non limitatif en référence aux dessins annexés d'autre part, sur lesquels :
[Fig. 1] est une vue en coupe d'un système de transmission équipé de son dispositif d'actionnement selon un premier mode de réalisation de l'invention ;
[Fig. 2] est une vue de dessus de la came d'actionnement du dispositif d'actionnement de la figure 1 ;
[Fig. 3] est une vue simplifiée du dispositif d'actionnement de la figure 1 dans une première position extrême;
[Fig. 4] est une vue simplifiée du dispositif d'actionnement de la figure 1 dans une deuxième position extrême ;
[Fig. 5] est une autre vue simplifiée du dispositif d'actionnement de la figure 1 ;
[Fig. 6] est une vue en perspective d'un système de transmission équipé de son dispositif d'actionnement selon un deuxième mode de réalisation de l'invention.

Les caractéristiques, variantes et les différentes formes de réalisation de l'invention peuvent être associées les unes avec les autres, selon diverses combinaisons, dans la mesure où elles ne sont pas incompatibles ou exclusives les unes par rapport aux autres.

Sur les figures, les éléments communs à plusieurs figures conservent la même référence.

Dans la description et les revendications, on utilisera, les termes "externe" et "interne" ainsi que les orientations "axiale" et "radiale" pour désigner, selon les définitions données dans la description, des éléments du système de transmission. Par convention, l'orientation "radiale" est dirigée orthogonalement à l'axe principal X de rotation du système de transmission déterminant l'orientation "axiale" et, de l'intérieur vers l'extérieur en s'éloignant dudit axe, l'orientation "circonférentielle" est dirigée orthogonalement à l'axe principal X et orthogonalement à la direction radiale.

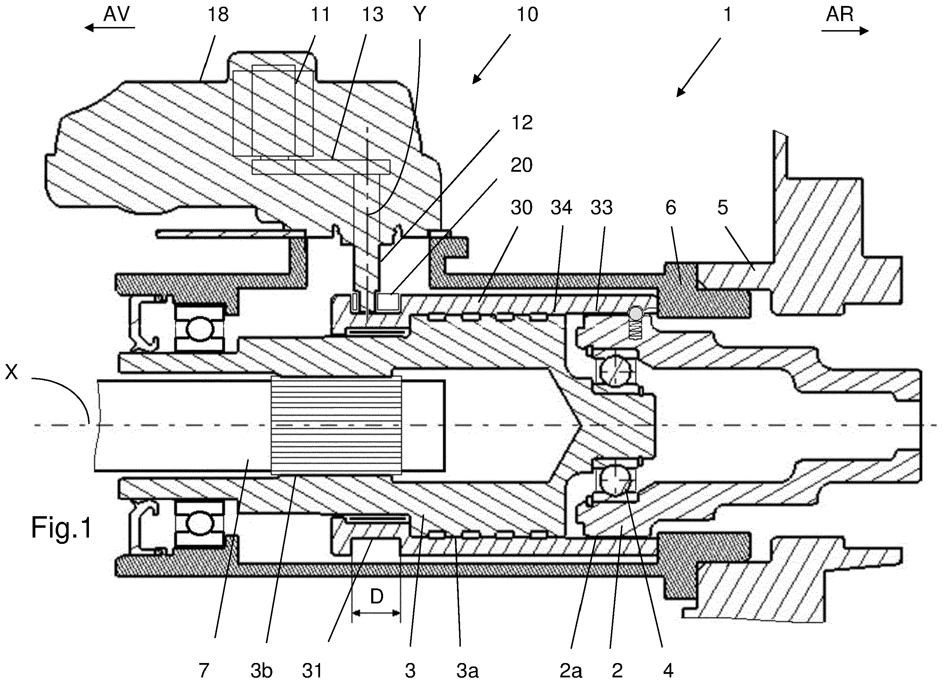

Les figures 1 à 5 illustrent un système de transmission 1 selon un premier mode de réalisation de l'invention. Le système de transmission 1 est ici un embrayage de connexion entre deux arbres 2, 3 qui est utilisé, dans une chaîne de transmission d'un véhicule, pour transmettre un couple provenant d'un moteur thermique ou électrique, non illustré, vers un arbre de roue 7 d'un véhicule automobile. Un tel système de transmission peut, par exemple, faire partie d'une chaîne de transmission secondaire apte à transmettre un couple d'un moteur secondaire du véhicule, tel qu'un moteur électrique, vers un essieu arrière ou avant d'un véhicule tandis qu'une chaîne de transmission primaire est apte à transmettre un couple d'un moteur principal, par exemple un moteur thermique, vers les arbres de roue d'un autre essieu du véhicule. Lorsque la machine électrique réversible associée au réducteur de vitesse est inactive, il n'y a pas d'intérêt à laisser ladite machine connectée à la roue du véhicule. On désengage alors l'embrayage de connexion.

Le système de transmission 1 est intercalé cinématiquement entre un réducteur de vitesse 5 et l'arbre de roue 7 du véhicule. L'arbre de sortie du réducteur de vitesse est appelé arbre menant 2. L'arbre menant 2 de transmission du système de transmission 1 comprend une première cannelure externe 2a usinée sur son extrémité.

Le système de transmission 1 comprend également un arbre mené 3 de transmission coaxial à l'arbre menant 2 comprenant une deuxième cannelure externe 3a. Dans cet exemple, l'arbre mené 3 est inséré dans l'arbre menant 2 et guidé en rotation grâce à un palier de guidage 4. L'arbre mené 3 de transmission comprend une cannelure interne de sortie de couple 3b liée en rotation avec l'arbre de roue 7 du véhicule.

Afin d'actionner le système de transmission 1, on utilise un dispositif d'actionnement 10 alimenté électriquement. Le dispositif d'actionnement 10 comprend notamment :
- un moteur électrique 11 lié cinématiquement à un dispositif de réduction de vitesse 13 et un arbre de sortie 12 du dispositif de réduction de vitesse d'axe de rotation Y ;
- une came d'actionnement 20 solidaire en rotation de l'arbre de sortie 12 ;
- une pièce de réception 30 mobile axialement selon un axe principal X perpendiculaire à l'axe de rotation Y comportant un logement de réception 31 de la came d'actionnement formé par deux surfaces parallèles 32 entre-elles et perpendiculaires à l'axe principal X.

Dans ce dispositif d'actionnement, la pièce de réception 30 se déplace axialement entre deux positions extrêmes lorsque l'arbre de sortie pivote autour de son axe de rotation Y.

Plus précisément, la pièce de réception 30 est un baladeur axial ayant une forme de révolution, le baladeur axial 30 comprenant au moins une première cannelure interne 33 de connexion agencée pour entrainer en rotation l'arbre menant 2 et une deuxième cannelure interne 34 de connexion agencée pour entrainer en rotation l'arbre mené 3. Les première et deuxième cannelures internes 33, 34 sont engagées respectivement dans la première cannelure externe 2a de l'arbre menant et la deuxième cannelure externe 3a de l'arbre mené lorsque la pièce de réception 30 est dans une des deux positions extrêmes de la pièce de réception 30, cette position extrême étant appelée deuxième position extrême d'accouplement.

La deuxième cannelure interne 34 de connexion est désengagée de la deuxième cannelure externe 3a de l'arbre mené 3 lorsque la pièce de réception 30 est dans une première position extrême de désaccouplement. Le baladeur axial 30 se déplace axialement d'une valeur Dx par rapport à l'arbre mené 3 de transmission qui est fixe axialement.

Afin de transmettre davantage de couple dans un encombrement axial réduit, la deuxième cannelure interne 34 de connexion du baladeur axial est réalisée sous la forme d'une série de cannelures internes espacées axialement selon un pas régulier, par exemple cinq cannelures internes espacées axialement selon un pas compris entre 3 et 15 mm. La deuxième cannelure externe 3a de l'arbre mené 3 est elle aussi réalisée sous la forme d'une série de cannelures internes espacées axialement selon le même pas régulier

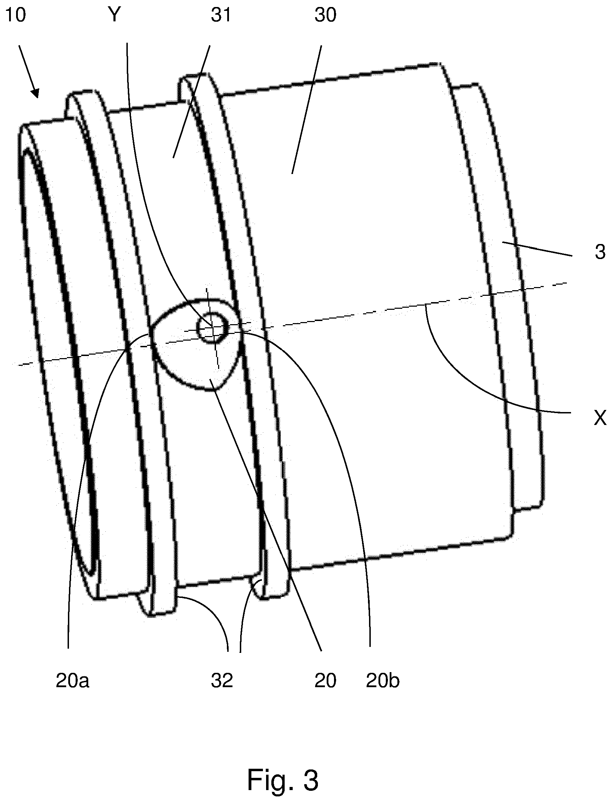

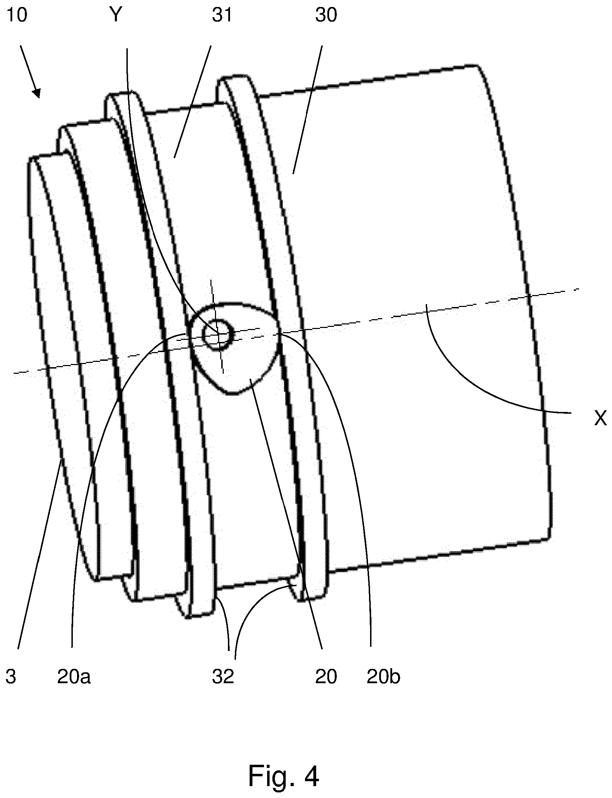

Comme cela est illustré sur les figures 3 et 4, la came d'actionnement 20 est fixée en bout de l'arbre de sortie 12, par exemple emmanchée en force. Notamment, la came d'actionnement 20 comprend un orifice de liaison 24, l'arbre de sortie 12 étant inséré dans cet orifice de liaison.

La rotation de la came d'actionnement 20 autour de l'axe de rotation Y entraine le déplacement de la pièce de réception 30. Dans ce premier mode de réalisation, la pièce de réception 30 est une pièce de révolution autour de l'axe principal X. La pièce de réception 30 est entrainée en rotation par l'arbre menant 2 par l'intermédiaire de la cannelure interne 33 qui engrène avec la première cannelure externe 2a. Comme le logement de réception **31** est réalisé sous la forme d'une gorge annulaire, un mouvement relatif de rotation selon l'axe principal X entre la pièce de réception 30 et la came d'actionnement 20 est possible. Dans cet exemple, la came d'actionnement 20 est reçue directement dans la pièce de réception 30. En variante, la came d'actionnement peut être reçue dans un composant intermédiaire lié cinématiquement à la pièce de réception.

La came d'actionnement 20 présente deux zones de contact 20a, 20b en appui sur les surfaces parallèles 32 du logement de réception, la largeur d'appui L selon l'axe principal X séparant les deux zones de contact est constante sur l'ensemble de la rotation de l'arbre de sortie. Pour garantir un débattement de la came d'actionnement 20 au sein de la gorge annulaire sans frottement intempestif, un jeu de fonctionnement est défini entre la largeur d'appui L de la came d'actionnement et la distance D séparant axialement selon l'axe principal X les deux surfaces parallèles 32 du logement de réception.

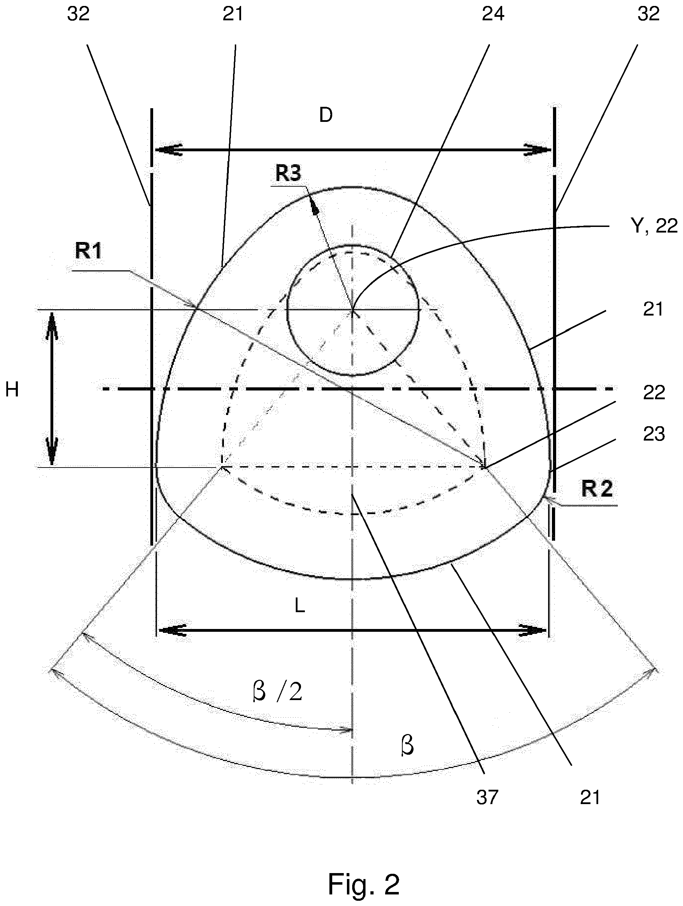

Comme illustré sur la figure 2, la came d'actionnement 20 comprend trois faces d'actionnement **21** réalisées sous la forme de portion de cylindre, les trois centres 22 de portion de cylindre forme un triangle isocèle, le sommet principal du triangle isocèle étant confondu avec l'axe de rotation Y de l'arbre de sortie. La géométrie des zones de contact 20a, 20b de la came d'actionnement utilise des portions de cylindre de grand diamètre permettant de réduire la pression de contact avec les surfaces parallèles du logement de réception. Lors de la rotation de la came d'actionnement, la face d'actionnement **21** glisse sur l'une des surfaces parallèles 32.

Dans ce premier mode de réalisation, la came d'actionnement 20 présente un profil d'actionnement symétrique dont l'axe de symétrie passe par la bissectrice 37 du triangle isocèle, la bissectrice du triangle isocèle correspondant au milieu du deuxième secteur angulaire α2. Le triangle isocèle présente un angle principal β par exemple compris entre 45° et 150°. La came d'actionnement 20 présente ainsi un profil symétrique passant par l'axe de rotation Y.

Grace à la géométrie particulière du profil de la came d'actionnement, le jeu de fonctionnement entre la largeur d'appui L de la came d'actionnement et la distance D est constant sur l'ensemble de la rotation de l'arbre de sortie. Le jeu de fonctionnement est de l'ordre de 0,1 mm à 0,6 mm. La précision de l'actionnement est ainsi améliorée.

Pour garantir un débattement de la came d'actionnement 20 au sein de la gorge annulaire 31 sans frottement intempestif, les faces d'actionnement 21 de la came d'actionnement 20 sont raccordées entre-elles par une face de liaison cylindrique 23 de rayon R2 inférieur au rayon R1 des portions de cylindre, le rayon de liaison étant compris entre 1 et 5 mm. Lors de la rotation de la came d'actionnement, la face de liaison cylindrique 23 est également amené à glisser sur l'une des surfaces parallèles 32. Les zones de contact 20a, 20b de la came d'actionnement sont alternativement formées par une face d'actionnement 21 et/ou une face de liaison cylindrique 23. La géométrie de la zone de contact 20a, 20b présente alors un rayon R1 ou un rayon R2.

La came d'actionnement 20 comprend également un rayon d'extrémité R3 agencé pour interagir avec les surfaces parallèles 32 de la pièce de réception 30 et raccordant de manière tangentielle deux faces d'actionnement 21, le centre de ce rayon d'extrémité R3 étant concentrique à l'axe de rotation Y. Le centre du rayon d'extrémité R3 passe par la bissectrice 37 du triangle isocèle. La dimension du rayon R3 est définie de manière à respecter la largeur d'appui L. Ainsi, la somme du rayon R1 de la portion de cylindre formant la face d'actionnement 21 associé au sommet principal du triangle isocèle et le rayon R3 est égal à la largeur d'appui L.

Par exemple, le rayon d'extrémité R3 est supérieur au rayon R2 des faces de liaison cylindrique.

Afin de recentrer la came d'actionnement 20 dans le logement de réception 31, l'axe principal X de la pièce de réception 30 est non sécant à l'axe de rotation Y. Par exemple, l'axe de rotation Y est décalé par rapport un plan parallèle à l'axe de rotation Y et passant par l'axe principal X d'une valeur de quelques millimètres.

Ce dispositif d'actionnement 10 comprend également un boîtier de protection 18 qui protège le moteur électrique 11 et supporte le dispositif de réduction de vitesse 13. Le boitier de protection 18 est rapporté sur un fourreau de protection 6 du système de transmission 1. Le fourreau de protection 6 est de forme cylindre d'axe confondu avec l'axe principal X et comporte un orifice de passage de l'arbre de sortie 12 du dispositif d'actionnement. L'axe de l'orifice de passage est perpendiculaire à l'axe principal X. Le fourreau de protection 6 est rapporté sur le carter du réducteur de vitesse 5.

On va maintenant décrire le fonctionnement du dispositif d'actionnement permettant de passer de la première position extrême de désaccouplement à la deuxième position extrême d'accouplement selon un temps d'actionnement réduit.

Comme illustré sur la figures 3 à 5, l'arbre de sortie 12 est agencé pour pivoter selon trois secteurs angulaires α1, α2, α3 adjacents, un premier secteur angulaire α1, un deuxième secteur angulaire α2 qui est adjacent au premier secteur angulaire α1, un troisième secteur angulaire α3 qui est adjacent au deuxième secteur angulaire α2.

Dans un premier temps, la pièce de réception 30 est dans la première position extrême de désaccouplement. La pièce de réception 30 reste immobile axialement dans la première position extrême lorsque la rotation de l'arbre de sortie se situe dans le premier secteur angulaire. La valeur d'angle du premier secteur angulaire α1 est de 15°. Sur ce premier secteur angulaire α1, la pièce de réception 30 reste dans une position stable qui permet de couper l'alimentation électrique au sein du dispositif d'actionnement, on réduit ainsi la consommation électrique du véhicule.

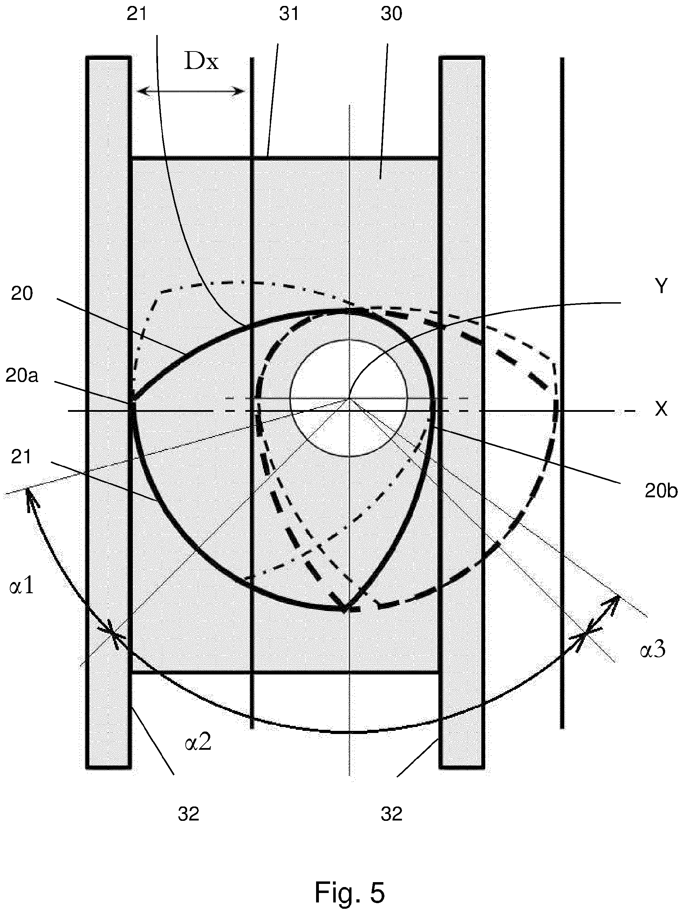

Dans un deuxième temps, la pièce de réception 30 se déplace axialement entre les deux positions extrêmes de désaccouplement et d'accouplement lorsque l'arbre de sortie 12 pivote selon la totalité du deuxième secteur angulaire α2. Le déplacement Dx de la pièce de réception 30 est visible sur la figure 5. La valeur d'angle du deuxième secteur angulaire α2 est d'environ 100°. Cette faible valeur d'angle, inférieur à 180°, permet de réduire le temps d'actionnement. La figure 3 illustre la position de la came d'actionnement 20 dans la première position extrême de désaccouplement. Le baladeur axial 30 est positionné axialement grâce aux faces d'actionnement 21 de la came d'actionnement 20 qui affleurent les surfaces parallèles 32 du logement de réception 31. La figure 4 illustre la position de la came d'actionnement 20 dans la deuxième position extrême d'accouplement.

Dans un troisième temps, la pièce de réception 30 reste immobile axialement dans la deuxième position extrême lorsque la rotation de l'arbre de sortie se situe dans le troisième secteur angulaire α3. La valeur d'angle du troisième secteur angulaire α3 est d'environ 5°. Sur ce troisième secteur angulaire α3, la pièce de réception 30 reste dans une position stable qui permet de couper l'alimentation électrique au sein du dispositif d'actionnement, on réduit ainsi la consommation électrique du véhicule.

Grace à la géométrie particulière du profil de la came d'actionnement, la largeur d'appui L selon l'axe principal X séparant les deux zones de contact 20a, 20b est constante sur les trois secteurs angulaires α1, α2, α3 de rotation de l'arbre de sortie. La figure 5 illustre les différentes positions angulaires prises par la came d'actionnement 20 au cours du déplacement Dx de la pièce de réception 30.

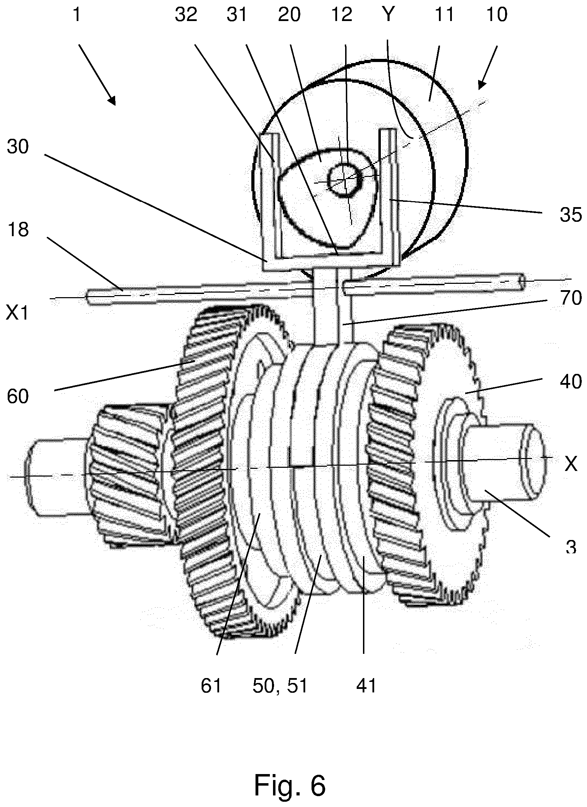

On va maintenant décrire en référence à la figure 6, un deuxième mode de réalisation de l'invention, qui diffère du précédent par une architecture de système de transmission comprenant une fourchette d'actionnement 70.

La figure 6 est une vue en perspective d'un système de transmission 1 correspondant à une partie d'un réducteur de vitesse. Le réducteur de vitesse peut par exemple être destiné à équiper un véhicule automobile électrique pour lequel le changement de rapport de vitesse se fait de manière automatisée. La sélection du rapport de vitesse entre un premier rapport et un deuxième rapport est opérée par un dispositif d'actionnement 10 selon l'invention.

Le dispositif d'actionnement 10 est configuré pour sélectionner un rapport de vitesse au moyen de la fourchette d'actionnement 70. A cet effet, la fourchette d'actionnement 70 permet de faire coulisser un manchon de crabotage 50 le long de l'axe principal X de manière à solidariser un arbre mené 3 de transmission avec un premier ou un deuxième pignons fous 40, 60. Une telle coopération entre le manchon de crabotage 50 et l'un ou l'autre des premier et deuxième pignons fous 40, 60 s'opère lorsqu'il existe une coïncidence angulaire entre les dentures de ces deux éléments.

Pour ce faire, le pignon fou 40 du premier rapport et le pignon fou 60 du deuxième rapport comportent chacun une cannelure de crabotage 41, 61 agencée autour de l'axe principal X apte à coopérer avec le manchon de crabotage 50. Le pignon fou 40 du premier rapport et le pignon fou 60 du deuxième rapport sont montés rotatifs autour de l'arbre mené 3 de transmission et le manchon de crabotage 50 est quant à lui monté solidaire en rotation de l'arbre mené 3, par exemple au moyen d'une cannelure interne 51. C'est donc la coopération entre la cannelure interne 51 du manchon de crabotage 50 et la cannelure de crabotage 41 du pignon fou 40 du premier rapport, respectivement de la cannelure de crabotage 61 du pignon fou 60 du deuxième rapport, qui permet de solidariser en rotation autour de l'axe principal X le pignon fou 40 du premier rapport, respectivement le pignon fou 60 du deuxième rapport, et l'arbre mené 3. Le manchon de crabotage 50 comporte par exemple des dents de crabotage à ses deux extrémités axiales dans la continuité de la cannelure interne 51.

De façon préférée, le manchon de crabotage 50 peut être maintenu espacé du premier pignon fou 40 du premier rapport et du deuxième pignon fou 60 du deuxième rapport dans une position neutre, pour laquelle aucun couple n'est transmis entre l'arbre d'entrée du réducteur de vitesse et l'arbre mené 3 de transmission car aucun des pignons fous 40 et 60 ne coopère avec le manchon de crabotage 50. La position neutre correspond à un mode de déconnexion dans laquelle la machine électrique ne transmet plus de couple aux roues du véhicule.

Le manchon de crabotage 50 est ici disposé entre le premier pignon fou 40 et le deuxième pignon fou 60, des bras de la fourchette d'actionnement 70 étant eux aussi disposés entre ces deux pignons fous 40, 60. A chaque premier pignon 40 et deuxième pignon 60 correspond à un rapport du réducteur de vitesse, par exemple avec un premier rapport de vitesse pour le premier pignon 40 et un deuxième rapport de vitesse pour le deuxième pignon 60. Afin de sélectionner l'un ou l'autre de ces rapports de vitesse, la fourchette d'actionnement 70 peut se déplacer latéralement de sorte à effectuer un crabotage du manchon de crabotage 50 avec soit le premier pignon fou 40, soit le deuxième pignon fou 60.

Comme illustré sur la figure 6, la fourchette d'actionnement 70 présente des bras qui viennent s'insérer dans une gorge annulaire du manchon de crabotage 50. La fourchette d'actionnement 70 coulisse axialement le long d'une tige de commande 18. Cette tige de commande 18 s'étend selon un axe secondaire X1 et correspond par exemple à un cylindre plein.

Afin d'actionner le système de transmission 1, on utilise un dispositif d'actionnement 10 alimenté électriquement. Le dispositif d'actionnement 10 comprend notamment :
- un moteur électrique 11 lié cinématiquement à un dispositif de réduction de vitesse et un arbre de sortie 12 du dispositif de réduction de vitesse d'axe de rotation Y ;
- une came d'actionnement 20 solidaire en rotation de l'arbre de sortie ;
- une pièce de réception 30 mobile axialement selon un axe principal X perpendiculaire à l'axe de rotation Y comportant un logement de réception 31 de la came d'actionnement formé par deux surfaces parallèles 32 entre-elles et perpendiculaires à l'axe principal X.

Dans ce dispositif d'actionnement, la pièce de réception 30 se déplace axialement entre deux positions extrêmes lorsque l'arbre de sortie pivote autour de son axe de rotation Y.

Plus précisément, la pièce de réception 30 est un organe de commande solidaire de la fourchette d'actionnement 70 et qui coulisse le long de l'axe secondaire X1 de la tige de commande 18, de sorte que lorsque la pièce de réception 30 est dans une première position extrême d'accouplement, un couple est transmis entre le premier pignon fou 40 et l'arbre mené 3 de transmission, lorsque la pièce de réception 30 est dans une deuxième position extrême d'accouplement, un couple est transmis entre le deuxième pignon fou 60 et l'arbre mené 3 de transmission.

Le manchon de crabotage 50 est dans une position intermédiaire de désaccouplement, autrement appelée position neutre, lorsque la position angulaire de l'arbre de sortie 12 se situe à la moitié du deuxième secteur angulaire α2.

Dans ce deuxième mode de réalisation, l'organe de commande 30 présente un logement de réception 31 en forme de U comprenant deux bras d'actionnement 35 supportant les surfaces parallèles 32 séparées selon l'axe principal X par une distance D.

On va maintenant décrire le fonctionnement de ce dispositif d'actionnement selon ce deuxième mode de réalisation de l'invention permettant de passer de la première position extrême d'accouplement à la deuxième position extrême d'accouplement selon un temps d'actionnement réduit.

Comme illustré sur la figure 6, l'arbre de sortie 12 est agencé pour pivoter selon trois secteurs angulaires α1, α2, α3 adjacents, un premier secteur angulaire α1, un deuxième secteur angulaire α2 qui est adjacent au premier secteur angulaire α1, un troisième secteur angulaire α3 qui est adjacent au deuxième secteur angulaire α2.

Dans un premier temps, l'organe de commande 30 est dans la première position extrême d'accouplement dans lequel le premier rapport de vitesse est engagé. La fourchette d'actionnement 70 reste immobile axialement dans la première position extrême lorsque la rotation de l'arbre de sortie se situe dans le premier secteur angulaire. La valeur d'angle du premier secteur angulaire α1 est de 5°. Sur ce premier secteur angulaire α1, l'organe de commande 30 reste dans une position stable qui permet de couper l'alimentation électrique au sein du dispositif d'actionnement, on réduit ainsi la consommation électrique du véhicule.

Dans un deuxième temps, l'organe de commande 30 se déplace axialement entre les deux positions extrêmes d'accouplement lorsque l'arbre de sortie 12 pivote selon la totalité du deuxième secteur angulaire α2. La valeur d'angle du deuxième secteur angulaire α2 est d'environ 120°. Cette faible valeur d'angle, inférieur à 180°, permet de réduire le temps d'actionnement.

Dans un troisième temps, l'organe de commande 30 est dans la deuxième position extrême d'accouplement dans lequel le deuxième rapport de vitesse est engagé. La fourchette d'actionnement 70 reste immobile axialement dans la deuxième position extrême d'actionnement lorsque la rotation de l'arbre de sortie se situe dans le troisième secteur angulaire α3. La valeur d'angle du troisième secteur angulaire α3 est identique à la valeur d'angle du premier secteur angulaire α1. Sur ce troisième secteur angulaire α3, l'organe de commande 30 reste également dans une position stable.

Pour garantir un débattement de la came d'actionnement 20 au sein du logement de réception 31 en forme de U de l'organe de commande 30 sans frottement intempestif, un jeu de fonctionnement est défini entre la largeur d'appui L de la came d'actionnement et la distance D séparant axialement selon l'axe principal X les deux surfaces parallèles 32 du logement de réception. Grace à la géométrie particulière du profil de la came d'actionnement 20, la largeur d'appui L selon l'axe principal X séparant les deux zones de contact 20a, 20b est constante sur les trois secteurs angulaires α1, α2, α3 de rotation de l'arbre de sortie.

Un autre avantage de l'invention est d'améliorer la fiabilité du moteur électrique. La mise en rotation de l'arbre de sortie 12 se fait sous faible couple étant donné que dans le premier secteur angulaire α1 ou le troisième secteur angulaire α3, la zone de contact 20a, 20b de la came d'actionnement 20 est tangente à la surface 32 du logement de réception. Il n'y a donc pas de couple résistant, ce qui permet la mise en rotation de la machine électrique sous faible couple.

La présente invention ne saurait toutefois se limiter aux moyens et configurations décrits et illustrés ici , mais est définie par les revendications suivantes.

## Revendications

1. Dispositif d'actionnement (10) pour un système de transmission (1), comprenant :
- un moteur électrique (11) lié cinématiquement à un dispositif de réduction de vitesse (13) et un arbre de sortie (12) du dispositif de réduction de vitesse d'axe de rotation (Y), l'arbre de sortie est agencé pour pivoter selon trois secteurs angulaires (α1, α2, α3) adjacents, un premier secteur angulaire (α1), un deuxième secteur angulaire (α2) qui est adjacent au premier secteur angulaire, un troisième secteur angulaire (α3) qui est adjacent au deuxième secteur angulaire ;
- une came d'actionnement (20) solidaire en rotation de l'arbre de sortie (12) ;
- une pièce de réception (30) mobile axialement selon un axe principal (X) perpendiculaire à l'axe de rotation (Y) comportant un logement de réception (31) de la came d'actionnement formé par deux surfaces parallèles (32) entre-elles et perpendiculaires à l'axe principal (X),
la pièce de réception (30) se déplace axialement entre deux positions extrêmes lorsque l'arbre de sortie pivote selon la totalité du deuxième secteur angulaire,
la pièce de réception (30) restant immobile axialement dans une première position extrême lorsque la rotation de l'arbre de sortie se situe dans le premier secteur angulaire, et la pièce de réception (30) restant immobile axialement dans une deuxième position extrême lorsque la rotation de l'arbre de sortie se situe dans le troisième secteur angulaire, **caractérisé en ce que** la came d'actionnement (20) présente deux zones de contact (20a, 20b) en appui sur les surfaces parallèles (32) du logement de réception, et la came d'actionnement (20) est configurée de telle sorte que la largeur d'appui (L) selon l'axe principal (X) séparant les deux zones de contact est constante sur les trois secteurs angulaires (α1, α2, α3) de rotation de l'arbre de sortie.

2. Dispositif d'actionnement (10) selon la revendication précédente, dans lequel un jeu de fonctionnement (J) est défini entre la largeur d'appui (L) de la came d'actionnement et la distance (D) séparant axialement selon l'axe principal (X) les deux surfaces parallèles (32) du logement de réception, le jeu de fonctionnement (J) est constant sur les trois secteurs angulaires (α1, α2, α3) de rotation de l'arbre de sortie.

3. Dispositif d'actionnement (10) selon l'une des revendications précédentes, dans lequel la pièce de réception (30) est une pièce de révolution autour de l'axe principal (X), le logement de réception (31) étant une gorge annulaire.

4. Dispositif d'actionnement (10) selon l'une des revendications précédentes, dans lequel la pièce de réception (30) comprend au moins une première cannelure de connexion (33) agencée pour entrainer en rotation un arbre mené et une deuxième cannelure de connexion (34) agencée pour entrainer un arbre menant, les première et deuxième cannelures de connexion (33, 34) étant engagées lorsque la pièce de réception (30) est dans une deuxième position extrême d'accouplement et l'une des première et deuxième cannelures de connexion (33, 34) étant désengagée lorsque la pièce de réception (30) est dans une première position extrême de désaccouplement.

5. Dispositif d'actionnement (10) selon l'une des revendications précédentes, dans lequel la came d'actionnement (20) comprend trois faces d'actionnement (21) réalisées sous la forme de portion de cylindre, les trois centres (22) de portion de cylindre forment un triangle isocèle, le sommet principal du triangle isocèle étant confondu avec l'axe de rotation (Y) de l'arbre de sortie.

6. Dispositif d'actionnement (10) selon la revendication précédente, dans lequel au moins deux faces d'actionnement (21) de la came d'actionnement (20) sont raccordées entre-elles par une face de liaison cylindrique (23) de rayon (R2) inférieur au rayon (R1) des portions de cylindre, le rayon (R2) de liaison étant compris entre 1 et 5 mm.

7. Dispositif d'actionnement (10) selon la revendication 5 ou 6, dans lequel la came d'actionnement (20) présente un profil d'actionnement symétrique dont l'axe de symétrie passe par la bissectrice (37) du triangle isocèle, la bissectrice du triangle isocèle correspondant au milieu du deuxième secteur angulaire (α2).

8. Dispositif d'actionnement (10) selon l'une des revendications 1 à 4, dans lequel la came d'actionnement (20) comprend trois faces d'actionnement (21) réalisées sous la forme de portion de cylindre, les trois centres (22) de portion de cylindre forment un triangle équilatéral, un des sommets du triangle équilatéral étant confondu avec l'axe de rotation (Y) de l'arbre de sortie.

9. Dispositif d'actionnement (10) selon l'une des revendications 1 à 4, dans lequel la came d'actionnement (20) comprend trois faces d'actionnement (21) réalisées sous la forme de portion de cylindre, les trois centres (22) de portion de cylindre forment un triangle isocèle rectangle, le sommet principal du triangle isocèle rectangle étant confondu avec l'axe de rotation (Y) de l'arbre de sortie.

10. Dispositif d'actionnement (10) selon l'une des revendications 5 à 9, dans lequel la came d'actionnement (20) comprend un rayon d'extrémité (R3) agencé pour interagir avec les surfaces parallèles (32) de la pièce de réception (30) lorsque celle-ci est dans l'une des deux positions extrêmes, ledit rayon d'extrémité (R3) raccorde de manière tangentielle deux faces d'actionnement (21), le centre de ce rayon d'extrémité (R3) étant concentrique à l'axe de rotation (Y).

11. Système de transmission (1) comprenant :
- un arbre menant (2) de transmission comprenant une première cannelure externe (2a) ;
- un arbre mené (3) de transmission coaxial à l'arbre menant comprenant une deuxième cannelure externe (3a) ;
- un dispositif d'actionnement (10) selon l'une quelconque des revendications précédentes, dans lequel la pièce de réception (30) est un baladeur axial ayant une forme de révolution, le baladeur axial (30) comprenant au moins une première cannelure interne (33) de connexion agencée pour entrainer en rotation l'arbre menant (2) et une deuxième cannelure interne (34) de connexion agencée pour entrainer en rotation l'arbre mené (3), les première et deuxième cannelures internes (33, 34) étant engagées respectivement dans la première cannelure externe (2a) de l'arbre menant et la deuxième cannelure externe (3a) de l'arbre mené lorsque la pièce de réception (30) est dans une des deux positions extrêmes, cette position extrême étant appelée deuxième position extrême d'accouplement.

12. Système de transmission (1) selon la revendication 11, dans lequel la deuxième cannelure interne (34) de connexion est désengagée de la deuxième cannelure externe (3a) de l'arbre mené lorsque la pièce de réception (30) est dans l'autre des deux positions extrêmes, cette position extrême étant appelée première position extrême de désaccouplement.

13. Système de transmission (1) comprenant :
- un arbre mené (3) de transmission ;
- un pignon fou (40) mobile en rotation autour de l'arbre mené (3) de transmission d'axe principal (X), le pignon fou (40) comprend une cannelure de crabotage (41) ;
- un manchon de crabotage (50) mobile axialement selon l'axe principal (X), le manchon de crabotage étant entrainé en rotation par une cannelure interne (51) en prise avec une cannelure externe (3a) de l'arbre mené de transmission, la cannelure interne (51) du manchon de crabotage étant apte à entrainer la cannelure de crabotage (41) du pignon fou ;
- une fourchette d'actionnement (70) mobile axialement le long d'une tige de commande (5) d'axe secondaire (X1) parallèle à l'axe principal (X) et agencée pour déplacer le manchon de crabotage (50) ;
- un dispositif d'actionnement (10) selon l'une quelconque des revendications 1 à 10, dans lequel la pièce de réception (30) est un organe de commande solidaire de la fourchette d'actionnement (70) et qui coulisse le long de l'axe secondaire (X1) de la tige de commande, de sorte que lorsque la pièce de réception est dans une première position extrême de désaccouplement, aucun couple n'est transmis entre le pignon fou et l'arbre mené de transmission et lorsque la pièce de réception est dans une deuxième position extrême d'accouplement, un couple est transmis entre le pignon fou et l'arbre mené de transmission.

14. Système de transmission (1) comprenant :
- un arbre mené (3) de transmission ;
- un premier pignon fou (40) mobile en rotation autour de l'arbre mené (3) de transmission d'axe principal (X) et un deuxième premier pignon fou (60) mobile en rotation autour de l'arbre mené (3) de transmission, chacun des deux pignons fous (40, 60) comprend une cannelure de crabotage (41, 61) ;
- un manchon de crabotage (50) mobile axialement selon l'axe principal (X), le manchon de crabotage étant entrainé en rotation par une cannelure interne (51) en prise avec une cannelure externe (3a) de l'arbre mené de transmission, la cannelure interne du manchon de crabotage étant apte à entrainer la cannelure de crabotage de l'un ou l'autre des pignons fous ;
- une fourchette d'actionnement (70) mobile axialement le long d'une tige de commande d'axe secondaire (X1) parallèle à l'axe principal (X) et agencée pour déplacer le manchon de crabotage (50) ;
- un dispositif d'actionnement (10) selon l'une quelconque des revendications 1 à 10, dans lequel la pièce de réception (30) est un organe de commande solidaire de la fourchette d'actionnement (70) et qui coulisse le long de l'axe secondaire (X1) de la tige de commande, de sorte que lorsque la pièce de réception est dans une première position extrême de d'accouplement, un couple est transmis entre le premier pignon fou et l'arbre mené de transmission, lorsque la pièce de réception est dans une deuxième position extrême d'accouplement, un couple est transmis entre le deuxième pignon fou et l'arbre mené de transmission.

## Patentansprüche

1. Betätigungsvorrichtung (10) für ein Getriebesystem (1), umfassend:
- einen Elektromotor (11), der kinematisch mit einer Drehzahlminderungsvorrichtung (13) und einer Abtriebswelle (12) der Drehzahlminderungsvorrichtung mit Drehachse (Y) verbunden ist, wobei die Abtriebswelle so angeordnet ist, dass sie in drei benachbarten Winkelbereichen (α1, α2, α3) schwenkbar ist, einem ersten Winkelbereich (α1), einem zweiten Winkelbereich (α2), der an den ersten Winkelbereich angrenzt, und einem dritten Winkelbereich (α3), der an den zweiten Winkelbereich angrenzt;
- einen Betätigungsnocken (20), der drehfest mit der Abtriebswelle (12) verbunden ist;
- ein Aufnahmeteil (30), das axial entlang einer zur Drehachse (Y) senkrechten Hauptachse (X) beweglich ist und eine Aufnahme (31) für den Betätigungsnocken aufweist, die durch zwei zueinander parallele und zur Hauptachse (X) senkrechte Flächen (32) gebildet wird,
wobei sich das Aufnahmeteil (30) axial zwischen zwei Endpositionen bewegt, wenn die Abtriebswelle um den gesamten zweiten Winkelbereich schwenkt,
wobei das Aufnahmeteil (30) in einer ersten Endposition axial unbeweglich bleibt, wenn sich die Drehung der Abtriebswelle im ersten Winkelbereich befindet,
und das Aufnahmeteil (30) axial unbeweglich in einer zweiten Endposition bleibt, wenn sich die Drehung der Abtriebswelle im dritten Winkelbereich befindet, **dadurch gekennzeichnet, dass** der Betätigungsnocken (20) zwei Kontaktbereiche (20a, 20b) aufweist, die auf den parallelen Flächen (32) des Aufnahmegehäuses aufliegen, und der Betätigungsnocken (20) so ausgebildet ist, dass die Auflagebreite (L) entlang der Hauptachse (X), die die beiden Kontaktbereiche trennt, über die drei Drehwinkelbereiche (α1 , α2, α3) der Abtriebswelle konstant ist.

2. Betätigungsvorrichtung (10) nach dem vorhergehenden Anspruch, bei der ein Betriebsspiel (J) zwischen der Auflagebreite (L) des Betätigungsnockens und dem Abstand (D) definiert ist, der die beiden parallelen Flächen (32) des Aufnahmeraums axial entlang der Hauptachse (X) trennt, wobei das Spiel (J) über die drei Drehwinkelbereiche (α1 , α2 , α3) der Abtriebswelle konstant ist.

3. Betätigungsvorrichtung (10) nach einem der vorstehenden Ansprüche, wobei das Aufnahmeteil (30) ein um die Hauptachse (X) rotationssymmetrisches Teil ist und die Aufnahmeaufnahme (31) eine ringförmige Nut ist.

4. Betätigungsvorrichtung (10) nach einem der vorstehenden Ansprüche, wobei das Aufnahmeteil (30) mindestens eine erste Verbindungsnut (33) zum Antreiben einer angetriebenen Welle und eine zweite Verbindungsnut (34) zum Antreiben einer Antriebswelle umfasst, wobei die erste und die zweite Verbindungsnut (33, 34) in Eingriff stehen, wenn sich das Aufnahmeteil (30) in einer zweiten Endstellung der Kupplung befindet, und wobei eine der ersten und zweiten Verbindungsnuten (33, 34) außer Eingriff ist, wenn sich das Aufnahmeteil (30) in einer ersten Endstellung der Entkopplung befindet.

5. Betätigungsvorrichtung (10) nach einem der vorstehenden Ansprüche, wobei der Betätigungsnocken (20) drei als Zylinderabschnitte ausgebildete Betätigungsflächen (21) umfasst, die drei Zentren (22) der Zylinderabschnitte ein gleichschenkliges Dreieck bilden, wobei der Hauptscheitelpunkt des gleichschenkligen Dreiecks mit der Drehachse (Y) der Abtriebswelle zusammenfällt.

6. Betätigungsvorrichtung (10) nach dem vorhergehenden Anspruch, bei der mindestens zwei Betätigungsflächen (21) des Betätigungsnockens (20) durch eine zylindrische Verbindungsfläche (23) mit einem Radius (R2) verbunden sind, der kleiner ist als der Radius (R1) der Zylinderabschnitte, wobei wobei der Verbindungsradius (R2) zwischen 1 und 5 mm liegt.

7. Betätigungsvorrichtung (10) nach Anspruch 5 oder 6, wobei der Betätigungsnocken (20) ein symmetrisches Betätigungsprofil aufweist, dessen Symmetrieachse durch die Winkelhalbierende (37) des gleichschenkligen Dreiecks verläuft, wobei die Winkelhalbierende des gleichschenkligen Dreiecks der Mitte des zweiten Winkelbereichs (α2) entspricht.

8. Betätigungsvorrichtung (10) nach einem der Ansprüche 1 bis 4, wobei der Betätigungsnocken (20) drei als Zylinderabschnitte ausgebildete Betätigungsflächen (21) umfasst, die drei Zentren (22) der Zylinderabschnitte ein gleichseitiges Dreieck bilden, wobei einer der Scheitelpunkte des gleichseitigen Dreiecks mit der Drehachse (Y) der Abtriebswelle zusammenfällt.

9. Betätigungsvorrichtung (10) nach einem der Ansprüche 1 bis 4, wobei der Betätigungsnocken (20) drei als Zylinderabschnitte ausgebildete Betätigungsflächen (21) umfasst, die drei Zentren (22) der Zylinderabschnitte ein gleichschenkliges rechtwinkliges Dreieck bilden, wobei der Hauptscheitelpunkt des gleichschenkligen rechtwinkligen Dreiecks mit der Drehachse (Y) der Abtriebswelle zusammenfällt.

10. Betätigungsvorrichtung (10) nach einem der Ansprüche 5 bis 9, wobei der Betätigungsnocken (20) einen Endradius (R3) aufweist, der so angeordnet ist, dass er mit den parallelen Flächen (32) des Aufnahmeteils (30) zusammenwirkt, wenn sich dieses in einer der beiden Endpositionen befindet, wobei wobei der Endradius (R3) zwei Betätigungsflächen (21) tangential verbindet und der Mittelpunkt dieses Endradius (R3) konzentrisch zur Drehachse (Y) ist.

11. Getriebesystem (1) mit:
- einer Antriebswelle (2) mit einer ersten Außenverzahnung (2a);
- einer zur Antriebswelle koaxialen Abtriebswelle (3) mit einer zweiten Außenverzahnung (3a);
- eine Betätigungsvorrichtung (10) gemäß einem der vorstehenden Ansprüche, wobei das Aufnahmeteil (30) ein axialer Gleitring mit einer Rotationsform ist, wobei der Axialgleiter (30) mindestens eine erste innere Verbindungsnut (33), die zum Antreiben der Antriebswelle (2) in Drehung ausgelegt ist, und eine zweite innere Verbindungsnut (34) umfasst, die zum Antreiben der Abtriebswelle (3) in Drehung ausgelegt ist, wobei die erste und die zweite Innenverzahnung (33, 34) jeweils in die erste Außenverzahnung (2a) der Antriebswelle und in die zweite Außenverzahnung (3a) der Abtriebswelle eingreifen, wenn sich das Aufnahmeteil (30) in einer der beiden Endpositionen befindet, wobei diese Endposition als zweite Endposition der Kupplung bezeichnet wird.

12. Getriebesystem (1) nach Anspruch 11, wobei die zweite innere Verbindungsnut (34) von der zweiten äußeren Nut (3a) der Abtriebswelle gelöst ist, wenn sich das Aufnahmeteil (30) in der anderen der beiden Endpositionen befindet, wobei diese Endposition als erste Endposition der Entkopplung bezeichnet wird.

13. Getriebesystem (1) mit:
- einer angetriebenen Getriebewelle (3);
- einem um die angetriebene Getriebewelle (3) mit Hauptachse (X) drehbaren Ritzel (40), wobei das Ritzel (40) eine Klauenspalte (41) aufweist;
- eine axial entlang der Hauptachse (X) bewegliche Klauenkupplungsmuffe (50), wobei die Klauenkupplungshülse durch eine Innenverzahnung (51) in Eingriff mit einer Außenverzahnung (3a) der angetriebenen Getriebewelle in Drehung versetzt wird, wobei die Innenverzahnung (51) der Klauenkupplungshülse die Klauenkupplungsverzahnung (41) des Klauenzahnrades antreiben kann;
- eine Betätigungsgabel (70), die axial entlang einer Steuerstange (5) mit einer zur Hauptachse (X) parallelen Sekundärachse (X1) beweglich ist und dazu ausgelegt ist, die Klauenkupplungshülse (50) zu verschieben;
- eine Betätigungsvorrichtung (10) gemäß einem der Ansprüche 1 bis 10, bei der das Aufnahmeteil (30) ein mit der Betätigungsgabel (70) verbundenes Steuerelement ist, das entlang der Sekundärachse (X1) der Betätigungsstange gleitet, so dass, wenn sich das Aufnahmeteil in einer ersten Endstellung zum Auskuppeln befindet, kein Drehmoment zwischen dem Losrad und der angetriebenen Getriebewelle übertragen wird, und wenn sich das Aufnahmeteil in einer zweiten Endstellung zum Einkuppeln befindet, ein Drehmoment zwischen dem Losrad und der angetriebenen Getriebewelle übertragen wird.

14. Getriebesystem (1) mit:
- einer angetriebenen Getriebewelle (3);
- ein erstes Freilaufritzel (40), das um die angetriebene Welle (3) des Getriebes mit Hauptachse (X) drehbar ist, und ein zweites erstes Freilaufritzel (60), das um die angetriebene Welle (3) des Getriebes drehbar ist, wobei jedes der beiden Freilaufritzel (40, 60) eine Klauenkupplungsnut (41, 61) aufweist;
- eine axial entlang der Hauptachse (X) bewegliche Klauenkupplungsmuffe (50), wobei die Klauenkupplungshülse durch eine Innenverzahnung (51) in Eingriff mit einer Außenverzahnung (3a) der angetriebenen Antriebswelle in Drehung versetzt wird, wobei die Innenverzahnung der Klauenkupplungshülse in der Lage ist, die Klauenkupplungsverzahnung eines der beiden Loszahnräder anzutreiben;
- eine Betätigungsgabel (70), die axial entlang einer zur Hauptachse (X) parallelen Sekundärachse (X1) beweglich ist und dazu dient, die Klauenkupplungshülse (50) zu verschieben;
- eine Betätigungsvorrichtung (10) gemäß einem der Ansprüche 1 bis 10, bei der das Aufnahmeteil (30) ein mit der Betätigungsgabel (70) verbundenes Steuerelement ist, das entlang der Sekundärachse (X1) der Betätigungsstange gleitet, so dass, wenn sich das Aufnahmeteil in einer ersten Endstellung der Kupplung befindet, ein Drehmoment zwischen dem ersten Losrad und der angetriebenen Getriebewelle übertragen wird, und wenn sich das Aufnahmeteil in einer zweiten Endstellung der Kupplung befindet, ein Drehmoment zwischen dem zweiten Losrad und der angetriebenen Getriebewelle übertragen wird.

## Claims

1. Actuation device (10) for a transmission system (1), comprising:
- an electric motor (11) kinematically connected to a speed reduction device (13) and an output shaft (12) of the speed reduction device of axis of rotation (Y), the output shaft being arranged to pivot through three adjacent angular sectors (α1 , α2 , α3), a first angular sector (α1), a second angular sector (α2) adjacent to the first angular sector, and a third angular sector (α3) adjacent to the second angular sector;
- an actuation cam (20) rigidly connected to the output shaft (12) for rotation therewith;
- a receiving part (30) axially movable along a main axis (X) perpendicular to the axis of rotation (Y), comprising a receiving recess (31) for receiving the actuation cam formed by two surfaces (32) parallel to each other and perpendicular to the main axis (X),
the receiving part (30) moves axially between two end positions when the output shaft pivots through the whole second angular sector,
the receiving part (30) remaining axially immobile in a first end position when the rotation of the output shaft is situated in the first angular sector,
and the receiving part (30) remaining axially immobile in a second end position when the rotation of the output shaft is situated in the third angular sector, **characterized in that** the actuation cam (20) has two contact zones (20a, 20b) bearing on the parallel surfaces (32) of the receiving recess, and the actuation cam (20) is configured such that the bearing width (L) along the main axis (X) separating the two contact zones is constant in the three angular sectors (α1 , α2 , α3) of rotation of the output shaft.

2. Actuation device (10) according to the preceding claim, wherein an operating clearance (J) is defined between the bearing width (L) of the actuation cam and the distance (D) axially separating the two parallel surfaces (32) of the receiving recess along the main axis (X), and the operating clearance (J) is constant in the three angular sectors (α1 , α2 , α3) of rotation of the output shaft.

3. Actuation device (10) according to one of the preceding claims, wherein the receiving part (30) is a part exhibiting symmetry of revolution about the main axis (X), the receiving recess (31) being an annular groove.

4. Actuation device (10) according to one of the preceding claims, wherein the receiving part (30) comprises at least a first connecting spline (33) arranged to rotate a driven shaft, and a second connecting spline (34) arranged to drive a drive shaft, the first and second connecting splines (33, 34) being engaged when the receiving part (30) is in a second coupled end position and one of the first and second connecting splines (33, 34) being disengaged when the receiving part (30) is in a first uncoupled end position.

5. Actuation device (10) according to one of the preceding claims, wherein the actuation cam (20) comprises three actuation faces (21) made in the form of a cylinder portion, the three centres of the cylinder portions forming an isosceles triangle, the main vertex of the isosceles triangle being coincident with the axis of rotation (Y) of the output shaft.

6. Actuation device (10) according to the preceding claim, wherein at least two actuation faces (21) of the actuation cam (20) are connected together by a cylindrical connecting face (23) having a smaller radius (R2) than the radius (R1) of the cylinder portions, the connecting radius (R2) being between 1 and 5 mm.

7. Actuation device (10) according to Claim 5 or 6, wherein the actuation cam (20) has a symmetrical actuation profile the axis of symmetry of which passes through the bisector (37) of the isosceles triangle, the bisector of the isosceles triangle corresponding to the middle of the second angular sector (α2).

8. Actuation device (10) according to one of Claims 1 to 4, wherein the actuation cam (20) comprises three actuation faces (21) made in the form of a cylinder portion, the three centres (22) of the cylinder portions forming an equilateral triangle, one of the vertices of the equilateral triangle being coincident with the axis of rotation (Y) of the output shaft.

9. Actuation device (10) according to one of Claims 1 to 4, wherein the actuation cam (20) comprises three actuation faces (21) made in the form of a cylinder portion, the three centres (22) of the cylinder portions forming a rectangular isosceles triangle, the main vertex of the rectangular isosceles triangle being coincident with the axis of rotation (Y) of the output shaft.

10. Actuation device (10) according to one of Claims 5 to 9, wherein the actuation cam (20) comprises an end radius (R3) arranged to interact with the parallel surfaces (32) of the receiving part (30) when the latter is in one of the two extreme positions, said end radius (R3) tangentially connects two actuation faces (21), the center of this end radius (R3) being concentric with the axis of rotation (Y).

11. Transmission system (1) comprising:
- a drive transmission shaft (2) comprising a first external spline (2a);
- a driven transmission shaft (3) coaxial with the drive shaft, comprising a second external spline (3a);
- an actuation device (10) according to any one of the preceding claims, wherein the receiving part (30) is an axial sliding sleeve having a shape exhibiting symmetry of revolution, the axial sliding sleeve (30) comprising at least a first internal connecting spline (33) arranged to rotate the drive shaft (2) and a second internal connecting spline (34) arranged to rotate the driven shaft (3), the first and second internal splines (33, 34) being engaged respectively in the first external spline (2a) of the drive shaft and the second external spline (3a) of the driven shaft when the receiving part (30) is in one of the two end positions, this end position being referred to as the second coupled end position.

12. Transmission system (1) according to Claim 11, wherein the second internal connecting spline (34) is disengaged from the second external spline (3a) of the driven shaft when the receiving part (30) is in the other of the two end positions, this end position being referred to as the first uncoupled end position.

13. Transmission system (1) comprising:
- a driven transmission shaft (3);
- an idler gear (40) rotatably movable about the driven transmission shaft (3) of main axis (X), the idler gear (40) comprising an engaging spline (41);
- an engagement sleeve (50) axially movable along the main axis (X), the engagement sleeve being rotated by an internal spline (51) engaged with an external spline (3a) of the driven transmission shaft, the internal spline (51) of the engagement sleeve being capable of driving the engaging spline (41) of the idler gear;
- an actuation fork (70) axially movable along a control rod (5) of secondary axis (X1) parallel to the main axis (X) and arranged to move the engagement sleeve (50);
- an actuation device (10) according to any one of Claims 1 to 10, wherein the receiving part (30) is a control member rigidly connected to the actuation fork (70) and that slides along the secondary axis (X1) of the control rod, so that when the receiving part is in a first uncoupled end position, no torque is transmitted between the idler gear and the driven transmission shaft, and when the receiving part is in a second coupled end position, torque is transmitted between the idler gear and the driven transmission shaft.

14. Transmission system (1) comprising:
- a driven transmission shaft (3);
- a first idler gear (40) rotatably movable about the driven transmission shaft (3) of main axis (X) and a second idler gear (60) rotatably movable about the driven transmission shaft (3), each of the two idler gears (40, 60) comprising an engaging spline (41, 61);
- an engagement sleeve (50) axially movable along the main axis (X), the engagement sleeve being rotated by an internal spline (51) engaged with an external spline (3a) of the driven transmission shaft, the internal spline of the engagement sleeve being capable of driving the engaging spline of one or other of the idler gears;
- an actuation fork (70) axially movable along a control rod of secondary axis (X1) parallel to the main axis (X) and arranged to move the engagement sleeve (50);
- an actuation device (10) according to any one of Claims 1 to 10, wherein the receiving part (30) is a control member rigidly connected to the actuation fork (70) and that slides along the secondary axis (X1) of the control rod, so that when the receiving part is in a first coupled end position, torque is transmitted between the first idler gear and the driven transmission shaft, and when the receiving part is in a second coupled end position, torque is transmitted between the second idler gear and the driven transmission shaft.
